# EUROPÄISCHE PATENTSCHRIFT

(11) **EP 2 911 310 B1**
(45) Veröffentlichungstag und Bekanntmachung des Hinweises auf die Patenterteilung: **10.05.2017**
(21) Anmeldenummer: 14199242.0
(22) Anmeldetag: 19.12.2014
(51) Int. Cl.: H04B 1/74, H04L 9/00, H04W 12/12

(54) **Funkgerät-System und Verfahren mit Zeitparameter-Auswertung**
Radio device system and method with time parameter evaluation
Système d'appareil radio et procédé avec évaluation de paramètres temporels

(30) Priorität: 20.02.2014 DE 102014203095
(43) Veröffentlichungstag der Anmeldung: 26.08.2015
(73) Patentinhaber: Rohde & Schwarz GmbH & Co. KG, 81671 München (DE)
(72) Erfinder: Langguth, Torsten, Dr., 82008 Unterhaching (DE); Ebersberger, Michael, 82140 Olching (DE); Storn, Rainer, Dr., 85551 Kirchheim (DE)
(74) Vertreter: Körfer, Thomas

(56) Entgegenhaltungen:
- DE-A1-102004 052 787
- DE-A1-102007 033 914
- US-A1- 2008 104 704
- US-B1- 6 205 550

## Beschreibung

Die Erfindung bezieht sich auf ein Funkgerät-System mit einer Notfallfunktion. Das Funkgerät-System ist insbesondere für die Luftfahrt vorgesehen. Die Erfindung betrifft weiterhin ein Verfahren zum Überwachen der Ausführung eines Kommandos eines Hauptfunkgeräts innerhalb des Funkgerät-Systems.

Die DE 10 2007 033 914 A1 beschreibt ein Funkgerät-System mit einer Überwachungseinheit, wobei die Überwachungseinheit mit einem Hauptfunkgerät sowie einem Notfallfunkgerät verbunden ist. Der Zustand des Hauptfunkgeräts wird in der Überwachungseinheit ausgewertet. Dabei analysiert die Überwachungseinheit Kommandos, die an das Hauptfunkgerät gesendet werden. Es wird überprüft, ob das Kommando die geforderte Änderung des Zustandes des Hauptfunkgeräts bewirkt.

Mitunter ist es notwendig, einen zeitlichen Bezug zwischen dem Erhalten des Kommandos im Hauptfunkgerät sowie dem geänderten Zustand des Hauptfunkgeräts zu erfassen. Dies ist insbesondere zum Erkennen von Angriffen auf das Hauptfunkgerät notwendig, um nicht autorisierte Zugriffe auf das Hauptfunkgerät, beispielsweise zum Ausspähen von kryptografischen Schlüsseln oder Absetzen von Falschmeldungen, zu erkennen und verhindern zu können. Überdies ist der zeitliche Bezug zwischen dem Erhalt des Kommandos und der Zustandsänderung des Hauptfunkgeräts zu überwachen, um zu Überprüfen, ob Vorgaben eines Funkverkehrs, beispielsweise gemäß einem Standard oder einer technischen Spezifikation, eingehalten wurden oder um interne Zeitvorgaben für eine Zustandsänderung des Hauptfunkgeräts zu prüfen, wodurch auf die Funktionsfähigkeit des Hauptfunkgeräts geschlossen werden kann.

Es ist daher Aufgabe der hier vorliegenden Erfindung, ein Funkgerätsystem und ein Verfahren bereitzustellen, bei welchem die volle Funktionsfähigkeit, ein Fehlverhalten und/oder Manipulationsversuche am Hauptfunkgerät einfach erkannt werden.

Die genannte Aufgabe wird erfindungsgemäß durch das im Anspruch 1 beschriebene Funkgerät-System gelöst. Vorteilhafte Ausgestaltungen des Funkgerät-Systems sind in den vom Anspruch 1 abhängigen Ansprüchen beschrieben. Überdies wird die genannte Aufgabe erfindungsgemäß durch das in Anspruch 11 beschriebene Verfahren zum Überwachen der Ausführung eines Kommandos des Hauptfunkgeräts im Funkgerät-System gelöst. Vorteilhafte Ausgestaltungen dieses Verfahrens sind in den vom Anspruch 11 abhängigen Ansprüchen beschrieben.

Erfindungsgemäß wird davon ausgegangen, dass das Funkgerät-System zwei Arten von Funkgeräten aufweist, ein Hauptfunkgerät als eine erste Art sowie ein Notfallfunkgerät als eine zweite Art. Im Funkgerät-System ist weiterhin eine Überwachungseinheit vorgesehen, welche über ein Steuersignal eine Antenne des Funkgerät-Systems entweder mit dem Hauptfunkgerät oder dem Notfallfunkgerät verbindet. Die Überwachungseinheit überwacht die Kommandos für das Hauptfunkgerät.

Erfindungsgemäß ist vorgesehen, dass die Überwachungseinheit weiterhin eine Zeitauswerteinheit umfasst, welche die Bearbeitungskommandos bezüglich eines Zeitparameters auswertet. Dies hat den technischen Effekt, dass die Zeit zwischen Absetzen des Kommandos an das Hauptfunkgerät und das Ende der Kommandobearbeitung zeitlich erfasst wird. Wenn die Zeitdauer eine vorbestimmte Zeitspanne überschreitet, wird das von der Überwachungseinheit erkannt und als ein Fehler des Hauptfunkgeräts interpretiert.
Als Kommandos werden insbesondere Steuer- und Zustandsänderungsbefehle für das Hauptfunkgerät verstanden. Diese Kommandos werden entweder über die Antenne oder über eine Datenschnittstelle an das Hauptfunkgerät gesendet und von diesem bearbeitet.

Mit diesem erfindungsgemäßen Funkgerätsystem können einerseits interne Anweisungen zur Ausführung und Bearbeitung von Kommandos in Funkgeräten überwacht werden. Andererseits können auch Standardisierungsvorgaben, die zum bestimmungsgemäßen Betreiben des Funkgerätsystems notwendig sind, überprüft werden.

In einer bevorzugten Ausgestaltung ist der Zeitparameter eine vordefinierte Zeitdauer. Die vordefinierte Zeitdauer kann eine interne Vorgabe sein, beispielsweise 20 Millisekunden. Alternativ ist diese Zeitdauer eine standardisierte Zeitdauer, die maximal vergehen darf, bis das Kommando vom Hauptfunkgerät umgesetzt ist.

In einer alternativen vorzugsweisen Ausgestaltung ist der Zeitparameter die Laufzeit des Kommandos zwischen einem Senden des Kommandos an das Hauptfunkgerät und dem Beenden der Kommandobearbeitung durch das Hauptfunkgerät. Die Laufzeit bestimmt sich dabei im Wesentlichen durch interne Bauteile des Hauptfunkgeräts, insbesondere einen Prozessor, sowie die Signallaufzeiten auf den Leitungen innerhalb des Hauptfunkgeräts. Das Senden des Kommandos an das Hauptfunkgerät wird der Überwachungseinheit insbesondere mittels eines Steuersignals angezeigt.

In einer bevorzugten Ausgestaltung ist die Überwachungseinheit mit dem Notfallfunkgerät verbindbar, falls das Auswerten ergibt, dass der Zeitparameter nicht eingehalten wird. Dazu ist ein Antennenumschalter vorgesehen, der von der Überwachungseinheit gesteuert wird. Wird beispielsweise als Kommando ein Funkstille-Kommando an das Hauptfunkgerät gesendet, so darf das Funkgerät-System kommandogemäß keine Funksignale mehr absetzen, muss jedoch weiterhin eingerichtet sein, Funksignale zu empfangen. Derartige Funkstille-Kommandos sind beispielsweise im Militärbereich vorgesehen, um die aktuelle Position des Funkgerät-Systems nicht zu verraten. Funkstille-Kommandos sind auch im Schiffverkehr denkbar, um beispielsweise schwache Funksignale, beispielsweise von in Seenot geratenen Schiffen, empfangen zu können.

Wird an ein Hauptfunkgerät das Funkstille-Kommando gesendet, so muss innerhalb einer vordefinierten Zeitspanne sichergestellt sein, dass das Hauptfunkgerät keine Funksignale mehr aussendet. Wird nach dieser vordefinierten Zeitspanne trotzdem ein Funksignal von dem Hauptfunkgerät gesendet, wird das von der Überwachungseinheit als ein Fehlerfall bewertet und die Antenne mit dem Notfallfunkgerät verbunden.

In einer alternativen bevorzugten Ausgestaltung ist das Kommando ein Schlüssellösch-Kommando. Dieses Kommando ist insbesondere bei einer verschlüsselten Kommunikation des Hauptfunkgeräts vorzusehen. Dazu ist im Hauptfunkgerät ein kryptografischer Schlüssel vorgesehen, mit dessen Hilfe die zu kommunizierenden Informationen zwischen dem Hauptfunkgerät und einem externen Dritten kryptografisch verschlüsselt werden. Diese kryptografischen Schlüssel werden bevorzugt von Angreifern ausgespäht, um die verschlüsselte Kommunikation auszuspionieren.

Wird eine Attacke auf das Hauptfunkgerät vermutet, so wird ein Schlüssellösch-Kommando an das Hauptfunkgerät gesendet, um alle im Hauptfunkgerät befindlichen kryptographischen Schlüssel und/oder sensitiven Daten, insbesondere Identitätsdaten, zu löschen. Erfolgt der kommandierte Löschvorgang nicht innerhalb einer vordefinierten Zeitspanne, so wird bevorzugt vorgeschlagen, mittels der Überwachungseinheit Maßnahmen zur Schlüssellöschung im Hauptfunkgerät einzuleiten. Diese Maßnahmen sind insbesondere das Abschalten des Stroms, da die Schlüssel in einem flüchtigen Speicherbereich abgelegt sind, oder das erneute Senden des Schlüssellösch-Kommandos von der Überwachungseinheit.

Alternativ ist das Kommando ein Stör-Kommando, englisch Jamming-Signal. Dabei macht ein Störsender, der sogenannte Jammer, den einwandfreien Empfang einer Funknachricht schwierig oder unmöglich. Der Störsender sendet dabei Funkwellen aus und überlagert die ursprünglichen Wellen ganz oder teilweise. Dabei sind die Feldstärke, die Modulation des Störsenders sowie die Art der gestörten Nachricht von Bedeutung. Sendet das Hauptfunkgerät das Störsignal, so muss sichergestellt sein, dass durch das Aussenden des Störsignals keine Beschädigung des Hauptfunkgeräts, insbesondere keine Beschädigung der Empfänger-Eingangsstufe, erfolgt.

Wird nun ein Stör-Kommando an das Hauptfunkgerät gesendet, erzeugt das Hauptfunkgerät das Störsignal und sendet es über eine Antenne aus. Das Störsignal wird dabei einen größeren Frequenzbereich sequentiell durchlaufen, was englisch als Sweeping bezeichnet wird. Sendet das Hauptfunkgerät in einem Frequenzbereich, in dem es selbst auch Funkwellen empfangen und verarbeiten kann, würde durch das ausgesendete Störsignal eine Beschädigung oder Zerstörung der Eingangs-Empfängerstufe erfolgen. Um diese Beschädigung oder Zerstörung zu verhindern, muss sichergestellt sein, dass die Empfänger-Eingangsstufe des Hauptfunkgeräts zum Zeitpunkt des Aussendens des Störsignals deaktiviert ist. Erfolgt ab Empfang des Störsignals keine Deaktivierung der Eingangsstufe, wird automatisch das Notfallfunkgerät eingeschaltet und das Hauptfunkgerät zum Selbstschutz deaktiviert.
In einer bevorzugten Ausgestaltung erkennt die Überwachungseinheit eine Kommandoverfälschung. Dabei ist insbesondere vorgesehen, dass ein Kommando, welches durch einen Angreifer manipuliert worden ist, um ein nicht autorisiertes Reagieren des Hauptfunkgeräts zu erwirken, unterbunden werden kann. Dies erhöht die Sicherheit des Hauptfunkgeräts und stellt die Funktionsfähigkeit sicher.

In einer anderen bevorzugten Ausgestaltung erkennt die Überwachungseinheit ein nicht autorisiertes Öffnen des Hauptfunkgeräts, sogenanntes Tampering. Ein Öffnen erfolgt insbesondere dann, wenn Veränderungen an der Hardware des Funkgerät-Systems vorgenommen werden, um Manipulationen am Hauptfunkgerät vorzunehmen. Derartige Attacken können durch die erfindungsgemäße Ausgestaltung des Funkgerät-Systems verhindert werden, sodass sichergestellt ist, dass insbesondere kryptographische Schlüssel und/oder sensitive Daten nicht aus einem Hauptfunkgerät ausgelesen werden können.

Das erfindungsgemäße Verfahren zum Überwachen der Ausführung eines Kommandos umfasst insbesondere die Verfahrensschritte: Erfassen eines Zeitparameters einer Kommandobearbeitung durch das Hauptfunkgerät mittels der Zeitauswerteinheit; Erkennen des Nichteinhaltens einer vordefinierten Zeitdauer; Deaktivieren des Hauptfunkgeräts; und Aktivieren des Notfallgeräts.

Das Deaktivieren und Aktivieren umfasst insbesondere das Herstellen der Empfangs- und/oder Sendebereitschaft des Hauptfunkgeräts und/oder des Notfallfunkgeräts, die durch das Deaktivieren eingestellt, bzw. durch das Aktivieren hergestellt wird.

In einer bevorzugten Ausgestaltung der Erfindung startet die Überwachungseinheit das Erfassen ab Erhalten eines Kommandos an das Hauptfunkgerät.

In einer anderen bevorzugten Ausgestaltung der Erfindung beendet die Überwachungseinheit das Erfassen ab Anzeigen des Endes der Kommandobearbeitung durch das Hauptfunkgerät.

Insbesondere erkennt die Überwachungseinheit das Öffnen des Funkgerätsystems, wobei dadurch automatisch das Hauptfunkgerät deaktiviert und das Notfallfunkgerät aktiviert wird.

In einer weiteren bevorzugten Ausgestaltung zeigt das Hauptfunkgerät der Überwachungseinheit das Ende der Kommandobearbeitung an.

Nachfolgend werden anhand von Figuren der Zeichnung die Erfindung, beispielhafte weitere Ausführungsformen und Vorteile der Erfindung näher erläutert, wobei die Figuren lediglich Ausführungsbeispiele der Erfindung zeigen. Gleiche Bestandteile in den Figuren werden mit gleichen Bezugszeichen versehen. Es zeigen:
- Fig. 1: ein Blockschaltbild eines Ausführungsbeispiels eines erfindungsgemäßen Funkgerät-Systems;
- Fig. 2: ein Verfahrensablaufdiagramm eines Ausführungsbeispiels zum erfindungsgemäßen Aktivieren eines Notfallfunkgeräts;
- Fig. 3: ein Verfahrensablaufdiagramm eines Ausführungsbeispiels des erfindungsgemäßen Verfahrens;
- Fig. 4: ein Verfahrensablaufdiagramm eines Ausführungsbeispiels zur erfindungsgemäßen sequenziellen Inbetriebnahme des Funkgerät-Systems und
- Fig. 5: ein Verfahrensablaufdiagramm eines Ausführungsbeispiels zur erfindungsgemäßen parallelen Inbetriebnahme des Funkgerät-Systems.

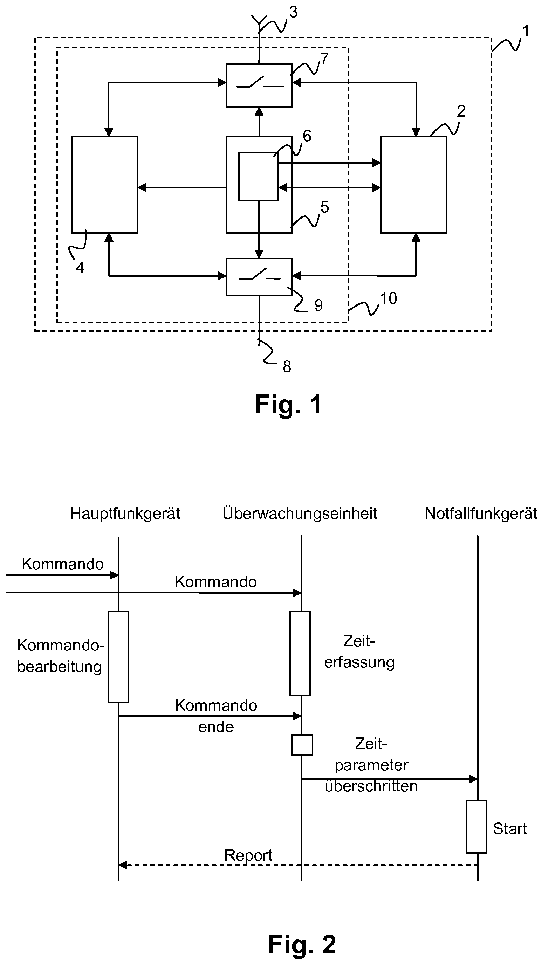

Fig. 1 beschreibt ein Ausführungsbeispiel des erfindungsgemäßen Funkgerät-Systems 1. Das Funkgerät-System 1 umfasst ein Hauptfunkgerät 2, ein Notfallfunkgerät 4 sowie eine Überwachungseinheit 5. Das Notfallfunkgerät 4 und das Hauptfunkgerät 2 sind über eine Antennenumschalteinheit 7 mit einer Antenne 3 verbindbar. Über eine Datenschnittstelle 8 können Daten mittels eines Datenschnittstellenumschalters 9 entweder an das Notfallfunkgerät 4 oder das Hauptfunkgerät 2 angeschaltet werden. Über die Datenschnittstelle 8 werden einerseits zu übertragende Informationen an das jeweilige Funkgerät 2, 4 bereitgestellt oder von dem jeweiligen Funkgerät 2, 4 bereitgestellt. Über die Datenschnittstelle 8 werden andererseits Kommandos an das jeweilige Funkgerät 2, 4 gesendet, um das jeweilige Funkgerät 2, 4 zu steuern. Das Funkgerät-System 1 wird insbesondere für die Luftfahrt und/oder die Schifffahrt eingesetzt. Alternative Einsatzmöglichkeiten sind erfindungsgemäß nicht ausgeschlossen.

Die Überwachungseinheit 5 ist sowohl mit der Antennenumschalteinheit 7 als auch mit der Datenschnittstellenumschalteinheit 9 verbunden und steuert diese. Die Überwachungseinheit 5 umfasst überdies eine Zeitauswerteinheit 6. Die Zeitauswerteinheit 6 ist mit dem Hauptfunkgerät 2 über eine Steuerleitung verbunden. Das Notfallfunkgerät 4, die Überwachungseinheit 5, die Antennenumschalteinheit 7 als auch die Datenschnittstellenumschalteinheit 9 sind in ihrer Gesamtheit von einer autorisierten Zertifizierungsstelle zertifiziert.

Nachfolgend wird die Funktionsweise des Funkgerät-Systems 1 erläutert. Im Normalfall wird über die Datenschnittstelle 8 ein Kommando mittels der Datenschnittstellenumschalteinheit 9 an das Hauptfunkgerät 2 gesendet. Das Kommando umfasst insbesondere Anweisungen zur Steuer- und Zustandsänderungen des Hauptfunkgeräts 2. Insbesondere sind das Funkstille-Kommando, das Stör-Kommando und das Schlüssellösch-Kommando als beispielhafte Kommandos über die Datenschnittstelle 8 an das Hauptfunkgerät 2 zu übertragen.

Um nun zu überprüfen, ob diese Kommandos die gewünschte Zustandsänderung des Hauptfunkgeräts 2 bewirkt haben, ist eine Überwachungseinheit 5 vorgesehen. Erfindungsgemäß ist in der Überwachungseinheit 5 eine Zeitauswerteinheit 6 integriert. Die Auswerteinheit 6 startet eine Zeiterfassung ab dem Zeitpunkt, ab dem ein Kommando an das Hauptfunkgerät 2 übermittelt wurde. Nach Abarbeitung des Kommandos zeigt das Hauptfunkgerät 2 der Zeitauswerteinheit 6 innerhalb der Überwachungseinheit 5 das Ende der Kommandobearbeitung an. Ab diesem Zeitpunkt stoppt die Zeitauswerteinheit die Zeiterfassung und der Zeitparameter wird ermittelt.

Der Zeitparameter ist eine vordefinierte Zeitspanne, die eingestellt ist, um sicherzustellen, dass ein Kommando der Datenschnittstelle 8 innerhalb einer gewissen Zeitdauer AT, beispielsweise 20 Millisekunden, durch das Hauptfunkgerät 2 bearbeitet wurde und ein entsprechender Zustand des Hauptfunkgeräts 2 geändert wurde. Ist die tatsächlich erfasste Zeitspanne größer als die vordefinierte Zeitspanne, so wird das von der Überwachungseinheit 5 als Fehlerfall interpretiert. In der Folge sendet die Überwachungseinheit 5 ein Steuerkommando an die Antennenumschalteinheit 7, wodurch die Sende- und Empfangsbereitschaft des Hauptfunkgeräts 2 eingestellt ist. Das Hauptfunkgerät 2 ist somit deaktiviert. In der Folge wird das Notfallfunkgerät 4 aktiviert. Somit ist eine Minimalfunktionalität des Funkgerät-Systems 1 weiter gegeben, um insbesondere im Notfall ein Funksignal absenden zu können. Überdies wird die Sicherheit des Funkgerät-Systems 1 erhöht, da durch die Deaktivierung des Hauptfunkgeräts 4 sicherheitsrelevante Informationen, beispielsweise kryptografische Schlüssel oder Identifikationsparameter des Hauptfunkgeräts 2, geschützt bleiben.

Es ist insbesondere darauf hinzuweisen, dass das Notfallfunkgerät 4 eine gegenüber dem Hauptfunkgerät 2 wesentlich verkleinerte Funktionalität aufweist. Insbesondere sind aufwendige Verschlüsselungsverfahren und Wellenformanpassungen mit dem Notfallfunkgerät 4 nicht möglich.

Die zu zertifizierenden internen Funktionseinheiten umfassen ein Notfallfunkgerät 4, welches eine in einem Standard definierten Mindestfunktionalität aufweist. Ferner wirkt das Notfallfunkgerät 4 mit mehreren Funktionseinheiten des zu zertifizierenden Bereichs 10 zusammen, wobei diese Funktionseinheiten um weitere Funktionseinheiten ergänzbar sind.

In Fig. 2 ist ein Verfahrensablauf eines erfindungsgemäßen Aktivierens des Notfallfunkgeräts 4 dargestellt. Dabei wird das ausführende Kommando über die Datenschnittstelle 8 an das Hauptfunkgerät 2 übertragen. Dieses Kommando wird auch der Überwachungseinheit 5 bereitgestellt. Das Bereitstellen erfolgt entweder mittels des Hauptfunkgeräts 2 oder alternativ über die Datenschnittstellenumschalteinheit 9. Im Hauptfunkgerät 2 erfolgt sodann die Kommandobearbeitung, ab der die Überwachungseinheit 5 eine Zeiterfassung startet. Das Hauptfunkgerät 2 signalisiert der Überwachungseinheit 5 das Ende der Kommandobearbeitung. Zu diesem Zeitpunkt stoppt die Überwachungseinheit 5 die Zeiterfassung.

Die Zeiterfassung erfolgt erfindungsgemäß über eine Zeitauswerteinheit 6 innerhalb der Überwachungseinheit 5. Im Folgeschritt analysiert die Überwachungseinheit 5 den erfassten Zeitparameter und vergleicht diesen Zeitparameter mit einer vordefinierten Zeitspanne. Ergibt dieser Vergleich, dass der Zeitparameter überschritten wurde, wird das Notfallfunkgerät 4 aktiviert und das Hauptfunkgerät 2 deaktiviert. Dies erfolgt insbesondere über das Umschalten der Datenschnittstellenumschalteinheit 9 und der Antennenumschalteinheit 7. Sobald das Notfallfunkgerät 4 gestartet ist, wird optional ein Bestätigungssignal an das Hauptfunkgerät 2 gesendet. Ein Übertragen von Informationen mittels des Hauptfunkgeräts 2 ist ab diesem Zeitpunkt nicht mehr möglich, da aufgrund der Zeitparameterüberschreitung die Überwachungseinheit 5 einen Fehlerfall diagnostiziert hat und das Hauptfunkgerät 2 deaktiviert wurde.
Alternativ zum Anzeigen des Kommandoendes durch das Hauptfunkgerät 2 ist es auch möglich, dass die Überwachungseinheit 5 auf Basis des empfangenen Kommandos eine automatische Deaktivierung des Hauptfunkgeräts 2 ansteuert, sobald eine vordefinierte Zeitspanne überschritten ist. In einem derartigen Fall kann ein Vergleich zwischen erfasster Zeitspanne und vordefinierter Zeitspanne unterbleiben.

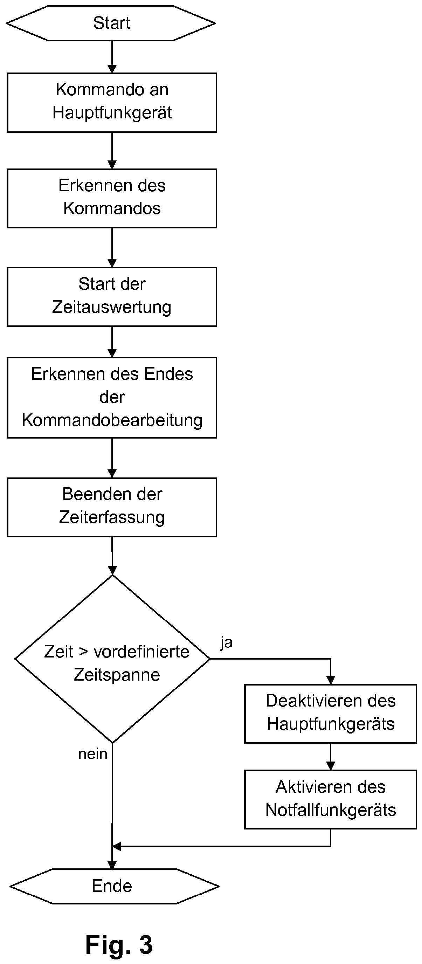

In Fig. 3 ist ein Verfahrensablaufdiagramm eines Ausführungsbeispiels des erfindungsgemäßen Verfahrens dargestellt. Dabei wird zunächst ein Kommando an das Hauptfunkgerät 2 gesendet. Dieses Kommando wird in der Überwachungseinheit 5 erkannt. Daraufhin startet eine Zeitauswerteinheit 6 eine Zeitauswertung. Im Folgeschritt wird das Ende der Kommandobearbeitung durch die Überwachungseinheit 5 erkannt, woraufhin das Beenden der Zeiterfassung durch die Zeitauswerteinheit 6 erfolgt. Die Zeitauswerteinheit 6 vergleicht nun die erfasste Zeit mit einer vordefinierten Zeitspanne. Ergibt der Vergleich, dass die erfasste Zeit größer ist als die vordefinierte Zeitspanne, erfolgt das Deaktivieren des Hauptfunkgeräts 2 und das Aktivieren des Notfallfunkgeräts 4. Danach wird das Verfahren beendet. Im Fall, dass die vordefinierte Zeitspanne größer ist, als die erfasste Zeitspanne, wird das Verfahren beendet, ohne dass das Hauptfunkgerät 2 deaktiviert wird.

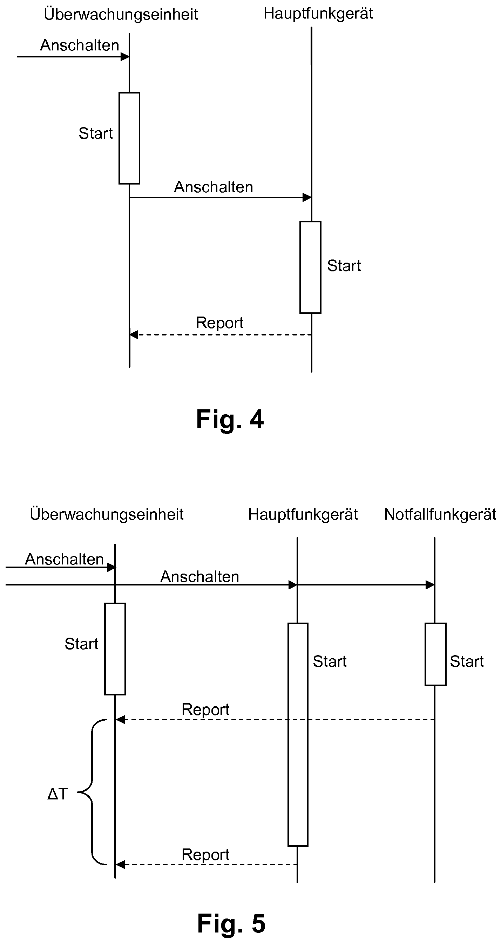

In den Figuren 4 und 5 wird ein Hochfahrprozess des Funkgerät-Systems 1 dargestellt. Dabei wird in Fig. 4 ein erfindungsgemäßes sequenzielles Hochfahren des Funkgerät-Systems 1 dargestellt. Ein Anschaltbefehl wird über die Überwachungseinheit 5 im Funkgerät-System 1 erhalten. Die Überwachungseinheit 5 startet sodann das Notfallfunkgerät 4. Ist das Notfallfunkgerät 4 einsatzbereit und funktionsbereit, wird durch die Überwachungseinheit 5 ein Anschaltkommando an das Hauptfunkgerät 2 übertragen. Ab diesem Zeitpunkt wird das Hauptfunkgerät 2 gestartet. Ist das Hauptfunkgerät 2 gestartet, wird ein Bestätigungskommando an die Überwachungseinheit 5 übertragen.

In Fig. 5 ist ein zu Fig. 4 alternatives Verfahren zum Starten des Funkgerät-Systems 1 dargestellt. Nach dem Anschaltkommando über die Datenschnittstelle 8 werden sowohl die Überwachungseinheit 5, als auch das Hauptfunkgerät 2 und das Notfallfunkgerät 4 gestartet. Aufgrund der Komplexität des Hauptfunkgeräts 2 ist es erst zu einem viel späteren Zeitpunkt einsatzbereit als das Notfallfunkgerät 4. Mitunter muss aber das Funkgerät-System 1 einsatzbereit sein, bevor ein Fahrzeug, beispielsweise Luftfahrzeug, Wasserfahrzeug, Landfahrzeug etc., bewegt werden darf. Der spätere Zeitpunkt der Einsatzbereitschaft verhindert sodann ein zügiges Bewegen des Fahrzeugs. Bevorzugt ist daher vorgesehen, dass ab dem Zeitpunkt der Einsatzbereitschaft des Notfallfunkgeräts 4, dieses die Einsatzbereitschaft des Funkgerät-Systems 1 herstellt. Das Notfallfunkgerät 4 übernimmt somit die Funkübertragungen des Funkgerät-Systems 1 bis zum vollständigen Hochfahren des Hauptfunkgeräts 2. Ist das Hauptfunkgerät 2 vollständig hochgefahren, wird ein Report an die Überwachungseinheit 5 übertragen und die Überwachungseinheit 5 veranlasst das Umschalten des Funkgerät-Systems 1 auf das Hauptfunkgerät 2.

Die Zeitspanne zwischen dem hochgefahrenen Notfallfunkgeräts 4 und dem noch startenden Hauptfunkgerät 2 wird also dazu verwendet, um bereits eine Grundfunktionalität des Funkgerätsystems 1 zu ermöglichen. Dies ist insbesondere bei einem sogenannten Alarmstart eines Flugzeuges von Vorteil, da ab dem Zeitpunkt der Bestätigung vom Notfallfunkgerät 4 eine Einsatzbereitschaft des Funkgerät-Systems 1 gegebenen ist, wohingegen bei Abwarten bis das Hauptfunkgerät 2 hochgefahren ist, eine Zeitspanne ΔT vergeht, die mitunter mehrere Minuten dauern kann.

## Patentansprüche

1. Funkgerät-System (1) mit einer Überwachungseinheit (5), wobei die Überwachungseinheit (5) mit einem Hauptfunkgerät (2) sowie einem Notfallfunkgerät (4) verbunden ist,
wobei mittels eines Steuersignals der Überwachungseinheit (5) eine Antenne (3) entweder mit dem Hauptfunkgerät (2) oder dem Notfallfunkgerät (4) verbunden ist und
wobei die Überwachungseinheit (5) Kommandos für das Hauptfunkgerät (2) überwacht,
**dadurch gekennzeichnet,**
**dass** die Überwachungseinheit (5) eine Zeitauswerteinheit (6) umfasst, welche die Bearbeitung eines der Kommandos durch das Hauptfunkgerät (2) bezüglich eines Zeitparameters auswertet, wobei dazu die Zeit zwischen dem Absetzen des Kommandos und dem Ende der Kommandobearbeitung erfasst wird.

2. Funkgerät-System nach Anspruch 1,
wobei der Zeitparameter eine vordefinierte Zeitdauer (ΔT) ist.

3. Funkgerät-System nach Anspruch 1 oder 2,
wobei der Zeitparameter die Gruppenlaufzeit des Kommandos zwischen einem Senden des Kommandos an das Hauptfunkgerät (2) und dem Beenden der Kommandobearbeitung durch das Hauptfunkgerät (2) ist.

4. Funkgerät-System nach einem der vorhergehenden Ansprüche,
wobei die Zeiterfassungseinheit (6) eingerichtet ist, ein Überschreiten einer Zeitdauer als Zeitparameter zu erfassen wobei daraufhin die Überwachungseinheit (5) die Antenne (3) mit dem Notfallfunkgerät (4) verbindet.

5. Funkgerät-System nach einem der vorhergehenden Ansprüche,
wobei eines der Kommandos ein Funkstille-Kommando ist.

6. Funkgerät-System nach einem der vorhergehenden Ansprüche,
wobei eines der Kommandos ein Schlüssellösch-Kommando ist.

7. Funkgerät-System nach Anspruch 6,
wobei die Überwachungseinheit (5) Mittel aufweist, die bei Erkennen des Schlüssellöschkommandos Maßnahmen zur Schlüssellöschung im Hauptfunkgerät (2) einleiten.

8. Funkgerät-System nach einem der vorhergehenden Ansprüche,
wobei eines der Kommandos ein Störkommando ist und wobei die Überwachungseinheit (5) das Hauptfunkgerät (2) zum Eigenschutz im eigenen Sendebereich deaktiviert.

9. Funkgerät-System nach einem der vorhergehenden Ansprüche,
wobei die Überwachungseinheit (5) eingerichtet ist, ein unautorisiertes manipuliertes Kommando zu erkennen und zu unterbinden.

10. Funkgerät-System nach einem der vorhergehenden Ansprüche,
wobei die Überwachungseinheit (5) ein Öffnen des Hauptfunkgeräts (2) erkennt.

11. Verfahren zum Überwachen der Ausführung eines Kommandos für das Hauptfunkgerät (2) im Funkgerät-System (1) nach einem der vorhergehenden Ansprüche mit den Verfahrensschritten:
- Erfassen eines Zeitparameters einer Kommandobearbeitung durch das Hauptfunkgerät (2) mittels der Zeitauswerteinheit (6) der Überwachungseinheit (5), wobei dazu die Zeit zwischen dem Absetzen des Kommandos und dem Ende der Kommandobearbeitung erfasst wird;
- Erkennen des Nichteinhaltens einer vordefinierten Zeitdauer (ΔT);
- Deaktivieren des Hauptfunkgeräts (2); und
- Aktivieren des Notfallfunkgeräts (4).

12. Verfahren nach Anspruch 11,
wobei die Überwachungseinheit (5) das Erfassen ab Erhalt eines Kommandos an das Hauptfunkgerät (2) startet.

13. Verfahren nach einem der Ansprüche 11 oder 12,
wobei die Überwachungseinheit (5) das Erfassen ab Anzeige des Endes der Kommandobearbeitung durch das Hauptfunkgerät (2) beendet.

14. Verfahren nach einem der Ansprüche 11 bis 13,
wobei:
- die Überwachungseinheit (5) das Öffnen des Funkgerät-Systems (1) erkennt;
- das Hauptfunkgerät (2) deaktiviert; und
- das Notfallfunkgeräts (4) aktiviert.

15. Verfahren nach einem der Ansprüche 11 bis 14,
wobei das Hauptfunkgerät (2) der Überwachungseinheit (5) das Ende der Kommandobearbeitung anzeigt.

## Claims

1. Radio device system (1) with a monitoring unit (5),
wherein the monitoring unit (5) is connected with a main radio device (2) and an emergency radio device (4),
wherein an antenna (3) is connected either with the main radio device (2) or with the emergency radio device (4) by means of a control signal from the monitoring unit (5), and
wherein the monitoring unit (5) monitors commands for the main radio device (2), **characterised in that** the monitoring unit (5) comprises a time evaluating unit (6) which evaluates the processing of one of the commands by the main radio device (2) with respect to a time parameter, wherein for this the time between the initiation of the command and the end of processing of the command is detected.

2. Radio device system according to claim 1,
wherein the time parameter is a predefined length of time (ΔT).

3. Radio device system according to claim 1 or 2,
wherein the time parameter is the group delay of the command between the sending of the command to the main radio device (2) and the ending of the processing of the command by the main radio device (2).

4. Radio device system according to one of the preceding claims,
wherein the time detecting unit (6) is set up to detect the exceeding of a length of time as time parameter, whereupon the monitoring unit (5) then connects the antenna (3) with the emergency radio device (4).

5. Radio device system according to one of the preceding claims,
wherein one of the commands is a radio silence command.

6. Radio device system according to one of the preceding claims,
wherein one of the commands is a key deletion command.

7. Radio device system according to claim 6,
wherein the monitoring unit (5) has means which on recognising the key deletion command initiate measures to delete the key in the main radio device (2).

8. Radio device system according to one of the preceding claims,
wherein one of the commands is a jam command and wherein the monitoring unit (5) deactivates the main radio device (2) to protect itself in its own transmitting range.

9. Radio device system according to one of the preceding claims,
wherein the monitoring unit (5) is set up to recognise and to suppress an unauthorised manipulated command.

10. Radio device system according to one of the preceding claims,
wherein the monitoring unit (5) recognises opening of the main radio device (2).

11. Method for monitoring the execution of a command for the main radio device (2) in the radio device system (1) according to one of the preceding claims with the method steps:
- detection of a time parameter for processing of a command by the main radio device (2) by means of the time evaluating unit (6) of the monitoring unit (5), wherein for this the time between the initiation of the command and the end of processing of the command is detected;
- recognition of a failure to keep to a predefined length of time (ΔT);
- deactivation of the main radio device (2), and
- activation of the emergency radio device (4).

12. Method according to claim 11,
wherein the monitoring unit (5) starts the detection on receipt of a command to the main radio device (2).

13. Method according to one of claims 11 or 12,
wherein the monitoring unit (5) ends the detection on indication of the end of processing of the command by the main radio device (2).

14. Method according to one of claims 11 to 13,
wherein:
- the monitoring unit (5) recognises the opening of the radio device system (1);
- deactivates the main radio device (2), and
- activates the emergency radio device (4).

15. Method according to one of claims 11 to 14,
wherein the main radio device (2) indicates the end of processing of the command to the monitoring unit (5).

## Revendications

1. Système d'appareil radio (1) comprenant une unité de surveillance (5), dans lequel l'unité de surveillance (5) est reliée à un appareil radio principal (2) ainsi qu'à un appareil radio d'urgence (4),
dans lequel une antenne (3) est reliée soit à l'appareil radio principal (2) soit à l'appareil radio d'urgence (4) au moyen d'un signal de commande de l'unité de surveillance (5) et
dans lequel l'unité de surveillance (5) surveille des commandes pour l'appareil radio principal (2),
**caractérisé**
**en ce que** l'unité de surveillance (5) comprend une unité d'évaluation temporelle (6), laquelle évalue le traitement d'une des commandes par l'appareil radio principal (2) par rapport à un paramètre de temps, dans lequel le temps entre l'entrée de la commande et la fin du traitement de la commande est détecté à cet effet.

2. Système d'appareil radio selon la revendication 1,
dans lequel le paramètre de temps est une durée (ΔT) prédéfinie.

3. Système d'appareil radio selon la revendication 1 ou 2,
dans lequel le paramètre de temps est le temps de propagation de groupe de la commande entre une émission de la commande en direction de l'appareil radio principal (2) et la fin du traitement de la commande par l'appareil radio principal (2).

4. Système d'appareil radio selon l'une quelconque des revendications précédentes,
dans lequel l'unité de détection de temps (6) est conçue pour détecter un dépassement d'une durée en tant que paramètre de temps, à la suite de quoi l'unité de surveillance (5) relie l'antenne (3) à l'appareil radio d'urgence (4).

5. Système d'appareil radio selon l'une quelconque des revendications précédentes,
dans lequel une des commandes est une commande de silence radio.

6. Système d'appareil radio selon l'une quelconque des revendications précédentes,
dans lequel une des commandes est une commande de suppression de clé.

7. Système d'appareil radio selon la revendication 6,
dans lequel l'unité de surveillance (5) comprend des moyens qui, lors de la détection de la commande de suppression de clé, appliquent des mesures permettant la suppression de la clé dans l'appareil radio principal (2).

8. Système d'appareil radio selon l'une quelconque des revendications précédentes,
dans lequel une des commandes est une commande perturbatrice et dans lequel l'unité de surveillance (5) désactive l'appareil radio principal (2) pour l'autoprotection dans une zone d'émission propre.

9. Système d'appareil radio selon l'une quelconque des revendications précédentes,
dans lequel l'unité de surveillance (5) est conçue pour détecter et pour empêcher une commande manipulée non autorisée.

10. Système d'appareil radio selon l'une quelconque des revendications précédentes,
dans lequel l'unité de surveillance (5) détecte une ouverture de l'appareil radio principal (2).

11. Procédé de surveillance de l'exécution d'une commande pour l'appareil radio principal (2) dans le système d'appareil radio (1) selon l'une quelconque des revendications précédentes, comprenant les étapes de procédé suivantes .
- détection d'un paramètre de temps d'un traitement de commande par l'appareil radio principal (2) au moyen de l'unité d'évaluation temporelle (6) de l'unité de surveillance (5), dans lequel le temps entre l'entrée de la commande et la fin du traitement de la commande est détecté à cet effet ;
- détection du non-maintien d'une durée prédéfinie (ΔT) ;
- désactivation de l'appareil radio principal (2) ; et
- activation de l'appareil radio d'urgence (4).

12. Procédé selon la revendication 11,
dans lequel l'unité de surveillance (5) commence la détection à partir de la réception d'une commande par l'appareil radio principal (2).

13. Procédé selon l'une quelconque des revendications 11 ou 12,
dans lequel l'unité de surveillance (5) termine la détection à partir de l'affichage de la fin du traitement de la commande par l'appareil radio principal (2).

14. Procédé selon l'une quelconque des revendications 11 à 13, dans lequel :
- l'unité de surveillance (5) repère l'ouverture du système d'appareil radio (1) ; i
- désactive l'appareil radio principal (2) ; et
- active l'appareil radio d'urgence (4).

15. Procédé selon l'une quelconque des revendications 11 à 14,
dans lequel l'appareil radio principal (2) indique à l'unité de surveillance (5) la fin du traitement de la commande.
